# EUROPÄISCHE PATENTSCHRIFT

(11) **EP 2 637 883 B1**
(45) Veröffentlichungstag und Bekanntmachung des Hinweises auf die Patenterteilung: **08.10.2014**
(21) Anmeldenummer: 11826165.0
(22) Anmeldetag: 10.11.2011
(51) Int. Cl.: F25B 27/02, B60H 1/18, B60H 1/32

(54) **ABGAS ANGETRIEBENE ADSORPTIONSKÄLTEMASCHINE**
ADSORPTION REFRIGERATION MACHINE OPERATED BY EXHAUST GAS
MACHINE FRIGORIFIQUE À ADSORPTION ACTIONNÉE PAR LES GAZ D'ÉCHAPPEMENT

(30) Priorität: 10.11.2010 DE 102010050951
(43) Veröffentlichungstag der Anmeldung: 18.09.2013
(73) Patentinhaber: InvenSor GmbH, 06886 Lutherstadt-Wittenberg (DE); AMOVIS GmbH, 13355 Berlin (DE)
(72) Erfinder: HOETGER, Michael, 13595 Berlin (DE); PAULUSSEN, Sören, 10405 Berlin (DE); BRAUNSCHWEIG, Niels, 10119 Berlin (DE)
(74) Vertreter: Lange, Sven
(86) Internationale Anmeldenummer: PCT/DE2011/075266
(87) Internationale Veröffentlichungsnummer: WO 2012/062312

(56) Entgegenhaltungen:
- EP-A1- 1 331 113
- DE-B3- 10 223 947
- US-A- 5 333 471

## Beschreibung

Die Erfindung betrifft ein Verfahren zur Bereitstellung von Kälte, wobei eine Adsorptionskältemaschine mit einer Abgasleitung verbunden ist. Weiterhin betrifft die Erfindung eine Vorrichtung zur Durchführung des Verfahrens.

Der klassische Verbrennungsmotor hat im Laufe seiner Entwicklung einen großen Reifegrad erreicht. Er wird voraussichtlich noch lange die dominante Antriebstechnologie darstellen, auch wenn zukünftige Entwicklungen mehr und mehr der Nachhaltigkeit von Ressourcenquellen bei Konstruktion und Brennstoffen Rechnung tragen müssen. Eine Konkurrenz erwächst dem Verbrennungsmotor im Konzept des Elektrofahrzeuges, das im Prinzip genauso alt, jedoch mit vollständig unterschiedlichen Vor- und Nachteilen versehen ist. Einem hoch effizienten, und technisch ausgereiften Antriebsmotor mit wesentlichen Vorteilen im citytypischen Nahverkehr steht ein bis heute nicht befriedigend gelöstes Problem bezüglich Energiespeicherung entgegen.

In Antriebseinrichtungen von Fahrzeugen, insbesondere auch den Verbrennungsmotoren von Kraftfahrzeugen, entsteht während des Betriebs eine nicht vernachlässigbare Menge an Abwärme. Diese wird über eine Antriebskühleinrichtung unter Erwärmung eines Kühlmittels, meist Wasser, abgeführt und/oder äußert sich in heißen Abgasen, die über eine entsprechende Abgasausstoßeinrichtung abgeführt werden.

Auch das Beheizen des Innenraums respektive das Kühlen ist weit mehr als nur eine Komfortfunktion, sondern stellt nach Aussage verschiedener Studien einen wesentlichen Aspekt der aktiven Sicherheit dar. Um den Beharrungszustand bei 8°C Außen- und 22°C Innenraumtemperatur beizubehalten genügt eine Heizleistung von 0,5 bis 0,7 kW im Umluftbetrieb.

Heizsysteme, bei denen die Wärme durch die Verbrennung von Brennstoffen freigesetzt wird, haben potentiell einen höheren Wirkungsgrad bei der Wärmeerzeugung, erfordern aber einen größeren Aufwand bei der Wärmeverteilung. Zum einen müssen die hohen Temperaturen des Übertragungsmediums nach der Verbrennung z.B. durch Mischen auf erträgliche Temperaturen gesenkt werden, und zum anderen verwenden am Markt verfügbare Systeme, wie z.B. handelsübliche Standheizungen, häufig fossile oder andere kohlenstoffhaltige Brennstoffe. Das wird in Bezug auf Elektrofahrzeuge mit dem sonst emissionsfreien Antrieb nicht nur als Makel angesehen, sondern führt in bestimmten

Gesetzesräumen wie z.B. Kalifornien dazu, dass solche Fahrzeuge nicht mehr als "Zero Emission Vehicle" (ZEV) eingestuft werden.

Analog dazu stellt sich das Problem der Kühlung / Klimatisierung des Fahrzeuginnenraums dar. Der Klimakompressor wird bei konventionellen PKW vom Verbrennungsmotor angetrieben und trägt so zu einem erhöhten Kraftstoffverbrauch bei. Im Teillastbetrieb führt die zusätzlich entnommene Leistung aber zu einer Erhöhung des Motorwirkungsgrades, so dass der zusätzliche Kraftstoffverbrauch kleiner ausfällt als die Antriebsenergie zunimmt. Im Elektrofahrzeug mit einem zwangsläufig elektrisch angetriebenen Klimakompressor reduziert die entnommene Energie dagegen deutlich die Reichweite (bis zu 30%).

Im Stand der Technik sind unterschiedliche Verfahren und Vorrichtungen zur Gewinnung von mechanischer oder elektrischer Energie aus Abwärme beschrieben. So offenbart beispielsweise die DE 10 2006 043 139 A1 eine Vorrichtung zur Gewinnung von Energie aus der Abwärme eines Kraftfahrzeugverbrennungsmotors. Hierbei ist mindestens ein mit einer Abwärmequelle des Verbrennungsmotors, der die Wärme auf einem vergleichweise geringen Temperaturniveau bereitstellt, in Verbindung stehendes thermisches Wandlungssystem bekannt, das zumindest einen Teil der von dem Verbrennungsmotor freigesetzten Abwärme in mechanische oder elektrische Energie umwandelt. In der Vorrichtung werden neben thermoelektrischen Wandlern, wie beispielsweise Thermoelemente, oder als thermoionische Generatoren ausgeführte Thermowandler auch thermodynamische Kreisprozesse mit bei niedrigen Temperaturen leicht verdampfbaren Arbeitsmitteln zur Stromerzeugung eingesetzt.

Weiterhin ist beispielsweise aus der DE 10 2007 004 765 A1 ein Verfahren zum Temperieren eines Kraftfahrzeugs im Stillstand bekannt. Bei dem beschriebenem Verfahren wird eine sogenannte Resttemperierungseinheit, die die während der Fahrt des Fahrzeugs angefallene Wärme und/oder Kälte zur Verfügung stellt, mit einer aktiven Temperierungseinheit, insbesondere einer Standheizung, kombiniert.

Die DE 10 2010 007 911 A1 offenbart eine Antriebseinheit eines Kraftfahrzeuges, die mit einer an eine Abtriebswelle gekoppelten Brennkraftmaschine und mit einem Abwärmenutzungssystem, durch das zumindest ein Teil der aus der Brennkraftmaschine und/oder aus einem der Brennkraftmaschine nachgeschalteten Abgassystem abgeführten Abwärme mittels eines thermisch angetriebenen Energiewandlers in elektrische Energie umgewandelt wird, die wenigstens teilweise zumindest einem Nebenverbraucher und/oder einem elektrischen Bordnetz des Kraftfahrzeugs zuleitbar ist. Die beschriebene technische Lösung zeichnet sich dadurch aus, dass zusätzlich zum Abwärmenutzungssystem eine weitere Wärmequelle vorgesehen ist, durch die der thermisch angetriebene Energiewandler mit Wärme versorgbar ist.

Die US 5 333 471, die den nächstliegenden Stand der Technik darstellt, offenbart ein Verfahren zur Bereitstellung von Kälte, wobei Abgase aus einer von einem Verbrennungsmotor kommenden Abgasleitung wahlweise einem ersten oder einem zweiten Adsorber zugeführt werden. Je nach Stellung einer im Umgebungsluftstrom angeordnete Klappe funktioniert ein Adsorber als adsorbierender Adsorber und der andere als desorbierender Adsorber, oder umgekehrt. Auf jeden Fall kommt es zu einer Mischung der kälteren Umgebungsluft und der heißen Gase aus dem Motor.

Im Stand der Technik sind Kältemaschinen beschrieben, die im Allgemeinen der Beheizung und/oder der Kühlung von Gebäuden dienen. Kältemaschinen realisieren thermodynamische Kreisprozesse, bei denen beispielsweise Wärme unterhalb der Umgebungstemperatur aufgenommen und bei einer höheren Temperatur abgegeben wird. Die thermodynamischen Kreisprozesse ähneln denen einer Wärmepumpe. Im Stand der Technik bekannte Kältemaschinen sind z. B. Adsorptionskälteanlagen, Diffusions- Absorptionskältemaschinen, Adsorptionskälteanlagen beziehungsweise Feststoffsorptionswärmepumpen sowie Kompressionskälteanlagen. Die aus dem Stand der Technik bekannten Anlagen sind in der Regel sehr groß, was einerseits an der installierten Kälteleistung und andererseits an der Ausführung des ad- oder absorbierenden Materials liegt.

Technische Kälteerzeugung basiert in der Regel auf der Verdampfung eines Kältemittels (Analogie: Verdunstungskälte). Konventionelle elektrische Kompressionskältemaschinen erreichen dies mittels einer Verdichtung (Druckerhöhung) und Entspannung (Druckabsenkung) des Kältemittels durch einen mechanischen Kompressionsvorgang. Bei Adsorptionskältemaschinen (AdKM) spricht man dagegen von einer thermischen Verdichtung. Dies geschieht im Falle der Adsorption mittels Trocknung (Desorption) eines Adsorptionsmaterials (oder Adsorptionsmittels) durch Wärmezufuhr. Ist das Adsorptionsmaterial getrocknet und wieder abgekühlt, beginnt es das Kältemittel aufzusaugen (Adsorption). Dadurch kommt es zu einer Druckabsenkung und somit zur Verdampfung des Kältemittels analog zur Kompressionskältemaschine.

Die im Stand der Technik offenbarte Adsorptionskältemaschine besteht aus einer Ad-/Desorber-Einheit, einem Verdampfer, einem Kondensator und/oder einer kombinierten Verdampfer/Kondensator-Einheit, die in einem gemeinsamen Behälter oder in getrennten Behältern untergebracht sind, welche dann mit Rohren o. ä. für die Kältemittelströmung miteinander verbunden sind. Der Vorteil der Sorptionmaschinen gegenüber konventioneller Wärmepumpentechnik liegt darin, dass der Ablauf der Adsorption/Desorption allein durch die Temperierung des Sorptionsmittels erfolgt. Somit kann der Behälter der Adsorptionsmaschine hermetisch und gasdicht abgeschlossen sein.

Im Prozess der Adsorptionsmaschine muss die Adsorptionswärme und die Kondensationswärme aus der Anlage abgeführt werden. Dies geschieht in der Regel über ein strömendes Wärmeträgermedium, das diese Wärme zu einer Wärmesenke transportiert, z.B. zu einem Rückkühlwerk, welches die Wärme an die Umgebungsluft abgibt. Wird jedoch die Adsorptionswärme und/oder die Kondensationswärme nicht bzw. schlecht abgeführt, würden die Temperaturen und damit die Drücke innerhalb der Adsorptionsmaschine steigen und der Adsorptionsprozess käme zum Erliegen. Somit kann der Wirkungsgrad einer Adsorptionsmaschine durch eine verbesserte Wärmeübertragung erheblich erhöht werden, was zwangsläufig auch die Wirtschaftlichkeit der Anlage verbessert.

Nachteile am Stand der Technik sind, dass herkömmliche Kompressions-Klimaanlagen den Gesamtfahrzeug-Wirkungsgrad senken und außerdem keine optimale Speicherung von thermischer Energie möglich ist.

Aufgabe der Erfindung ist es, ein Verfahren bereitzustellen, das die Abwärme eines Motors nutzt, Wärme und/oder Kälte erzeugt und nicht die Nachteile oder Mängel des Standes der Technik aufweist.

Gelöst wird die Aufgabe durch den unabhängigen Anspruch. Vorteilhafte Ausführungsformen ergeben sich aus den Unteransprüchen.

Die Erfindung betrifft ein Verfahren zur Bereitstellung von Kälte, umfassend folgende Schritte:
a. Einleiten von Abgasen aus einer, von einem Verbrennungsmotor kommenden Abgasleitung in ein mindestens einer Adsorptionskältemaschine vorgeschaltetes Regelorgan und/oder
b. Einleiten von Luft in das Regelorgan,
c. Einbringen der Abgase oder eines Abgas-Luft-Gemisches oder der Luft aus dem Regelorgan in mindestens einen Wärmetauscher der Adsorptionskältemaschine,
d. Desorption eines, in mindestens einer Adsorber- /Desorber-Einheit der Adsorptionskältemaschine befindlichen Adsorptionsmaterials durch Wärmeenergie des Abgases, wobei das, in mindestens einer Verdampfer-/Kondensator-Einheit vorliegende dampfförmige Kältemittel kondensiert wird, und
e. ein in der Adsorptionskältemaschine strömendes Kältemittel in einer Verdampfer- /Kondensator-Einheit der Adsorptionskältemaschine verdampft wird und hierdurch Kälte bereitgestellt wird.

Mittels des Verfahrens ist es möglich, ein, bei einem Verbrennungsprozess anfallendes Abgas als Antriebsenergie für eine Adsorptionskältemaschine zu verwenden. Hierbei wird das Abgas von einem Verbrennungsmotor über eine entsprechende Rohrleitung in einen Wärmetauscher der Adsorptionskältemaschine geleitet, in dem die thermische Energie des Abgases dazu genutzt werden kann, ein Kältemittel in einer Adsorber- /Desorber-Einheit der Adsorptionskältemaschine zu desorbieren, d. h. es ist bevorzugt, dass ein, in einer Adsorber-/Desorber-Einheit der Adsorptionskältemaschine befindliches Adsorptionsmaterial durch Wärmeenergie des Abgases desorbiert wird. Das Kältemittel ist bevorzugt Wasser oder Methanol. Es kann auch bevorzugt sein, das Abgas ohne Regelorgan in die Adsorptionskältemaschine einzuleiten. Im Sinne der Erfindung kann eine Adsorptionskältemaschine mindestens eine Adsorber- /Desorber-Einheit und mindestens eine Verdampfer- /Kondensator-Einheit umfassen, wobei auch Kombinationen hiervon bevorzugt sind, das heißt, es kann bevorzugt sein, dass eine bevorzugte Adsorptionskältemaschine mindestens eine Adsorber-Einheit, eine Desorber-Einheit, eine Verdampfer-Einheit und/oder eine Kondensator-Einheit aufweist.

Es war völlig überraschend, dass das bevorzugte Verfahren als ein Heiz- und/oder Kühlsystem für ein Kraftfahrzeug genutzt werden kann. Es wird ein universell einsetzbares Verfahren offenbart, dass die Abwärme einer Wärmequelle, insbesondere eines Verbrennungsmotors für eine Adsorptionskältemaschine verwendet und Kälte bereitstellt. Im Sinne der Erfindung bezeichnet eine Wärmequelle insbesondere eine, thermische Energie erzeugende Quelle, wobei die thermische Energie auch als Abfallprodukt anfallen kann. Durch das System ist eine Reduzierung der Anlagengröße bei gleichzeitiger Wirkungsgradsteigerung möglich. Darüber hinaus kann mittels dem Verfahren vorteilhafterweise Kälte- oder Wärmeenergie nahezu verlustfrei gespeichert werden (z. B. für eine Standklimatisierung oder Standbeheizung).

Ein Kraftfahrzeug bezeichnet im Sinne der Erfindung insbesondere maschinell angetriebene Fahrzeuge, die vorteilhafterweise ausgewählt sind aus der Gruppe umfassend Elektrofahrzeuge, Brennstoffzellen-Fahrzeuge, Verbrennungsmotor-Fahrzeuge oder schienengebundene Fahrzeuge. Die Größe und Leistung der Adsorptionskältemaschine kann vorteilhafterweise in Abhängigkeit von dem Kraftfahrzeug variiert werden. Es kann bevorzugt sein, die Adsorptionskältemaschine in unterschiedlichen Ausführungsformen zu gestalten, so dass runde, flache, eckige oder sonstige Geometrien realisiert werden. Das Verfahren findet vorteilhafterweise bei Ein- oder Mehrpersonenfahrzeuge Anwendung.

Für die Kondensation kann der Wärmetauscher der Adsorber-/Desorber-Einheit, der Kondensator-/Adsorber-/Desorber-Einheit oder ein sonstiger in der Adsorptionskältemaschine vorliegender Kondensator oder Wärmetauscher verwendet werden. Für eine kontinuierliche Kälteerzeugung kann es bevorzugt sein, zwei Adsorber alternierend zu betreiben, wobei sich De- und Adsorptionsphasen abwechseln. Zunächst wird ein Adsorptionsmaterial unter Wärmezufuhr desorbiert. Hierfür kann vorteilhafterweise die Abwärme des Abgases verwendet werden. Das zuvor adsorbierte Kältemittel tritt aus und kondensiert unter Wärmeabgabe. Es ist bevorzugt, dass die Adsorptionskältemaschinen mindestens zwei Adsorber- /Desorber-Einheiten zur phasenversetzten Desorption und Adsorption des Kältemittels aufweist, wobei der jeweils andere Adsorber adsorbiert und für den Verdampfungsvorgang im Verdampfer sorgt. Dies ermöglicht eine vorzugsweise kontinuierliche Bereitstellung von Kälte. Es ist bevorzugt, dass in der Adsorptionskältemaschine als Kältemittel Wasser verwendet wird. Hierdurch kann eine ökologisch unbedenkliche Kältemaschine bereitgestellt werden.

Das bevorzugte Verfahren umfasst insbesondere drei Phasen, nämlich die Regeneration, die Aktivierung und die Kälteerzeugung. Die Regeneration besteht vorteilhafterweise aus der Desorption des Adsorptionsmaterials (Wärmezufuhr) und der Kondensation des Kältemittels (Wärmeabfuhr). Bei der Kondensation wird vorzugsweise das in einer Verdampfer-/Kondensator-Einheit vorliegende dampfförmige Kältemittel kondensiert. Es ist bevorzugt, dass ein Übergang von dem dampfförmigen Kältemittel aus der Adsorber- /Desorber-Einheit in die Verdampfer- /Kondensator-Einheit durch ein Absperr-Ventil und/oder Rückschlagklappen verhindert wird.

An die Regeneration schließt sich vorteilhafterweise die Aktivierung an, bei der das zuvor desorbierte und demgemäß erhitzte Adsorptionsmaterial abgekühlt wird. Durch die Abkühlung des Adsorptionsmaterials ist es für einen nachfolgenden Adsorptionsprozess vorbereitet und adsorbiert dampfförmiges Kältemittel. Das Kältemittel wird vorzugsweise in einer Verdampfer- /Kondensator-Einheit unter Einwirkung von thermischer Energie verdampft. Die Prozesse der Adsorption und der Verdampfung werden im Sinne der Erfindung als Kälteerzeugung bezeichnet, da für die Verdampfung thermische Energie verwendet wird, die beispielsweise einer Umgebungsluft entzogen und so Kälte bereitgestellt wird. Es ist bevorzugt, dass die Regeneration, d. h. die Desorption und Kondensation während des Betriebes des Verbrennungsmotor ablaufen. Es ist demgemäß bevorzugt, dass die Desorption des Adsorptionsmaterials und die Kondensation des Kältemittels während Betrieb des Verbrennungsmotors erfolgen.

Im Sinne der Erfindung bezeichnet ein Verbrennungsmotor eine Wärmekraftmaschine, die chemische Energie eines Kraftstoffs durch Verbrennung in mechanische Arbeit umwandelt. Die Verbrennung findet dabei vorzugsweise in einem Verbrennungsraum statt, in dem ein Gemisch aus Kraftstoff und Umgebungsluft gezündet wird. Als Verbrennungsmotoren können im Sinne der Erfindung der Ottomotor und der Dieselmotor in Kraftfahrzeugen bezeichnet werden. Es war aber völlig überraschend, dass das Verfahren universell einsetzbar ist und auch mit einer thermischen Wärmequelle einer Dampfturbine, Dampfmaschine oder eines Stirlingmotors verbunden werden kann. Hierbei kann es vorteilhaft sein, wenn der Adsorptionskältemaschine über eine Verrohrung an eine Abgasleitung der Maschinen gekoppelt ist. werden nicht zu den Verbrennungsmotoren gezählt. Die für ihren Betrieb nötige Wärme muss nicht durch Verbrennung erzeugt werden. Auch die kontinuierlich arbeitenden Aggregate Gasturbine und Raketentriebwerk können überraschenderweise als thermische Wärmequelle mit der Adsorptionskältemaschine gekoppelt und so Kälte bereitgestellt werden.

Die Aktivierung d. h. insbesondere die Abkühlung des Adsorptionsmaterials erfolgt während Nicht-Betrieb oder Betrieb des Verbrennungsmotors. Es kann bevorzugt sein, dass mittels des Regelorgans Luft aus der Umgebung und kein Abgas in den Wärmetauscher der Adsorber- /Desorber-Einheit geleitet wird und hierdurch eine Kühlung des Adsorptionsmaterials und/oder der Adsorptionswärme erfolgt. Weiterhin kann es bevorzugt sein, dass Luft aus dem Regelorgan in mindestens eine Adsorber- /Desorber-Einheit und/oder Verdampfer- /Kondensator-Einheit geleitet wird. Dies kann auch aktiv während des Betriebes des Verbrennungsmotors erfolgen, wenn das Regelorgan die Zufuhr von Abgas in die Adsorptionskältemaschine verhindert und Luft, insbesondere Umgebungsluft in die Adsorptionskältemaschine leitet. Diesbezüglich kann es auch vorteilhaft sein, zur Kühlung des Adsorptionsmaterials Luft aus dem Regelorgan in mindestens eine Adsorber- /Desorber-Einheit und/oder Verdampfer- /Kondensator-Einheit zu leiten. Hierdurch wird nicht nur die Adsorber- /Desorber-Einheit durch Luft gekühlt, sondern auch mindestens eine Verdampfer-/Kondensator-Einheit. Dies kann vorteilhafterweise während des Betriebes oder Nicht-Betriebes des Verbrennungsmotors erfolgen. Es kann vorteilhaft sein, dass auch während des Nicht-Betriebes des Verbrennungsmotors aktiv mit einem Gebläse oder einer Venturidüse gekühlt wird, insbesondere Wärme abgeleitet wird.

Es ist bevorzugt, dass die Einleitung von Luft zur Rückkühlung der Adsorber- /Desorber-Einheit und/oder der Verdampfer- /Kondensator-Einheit mittels einem Gebläse oder einer Venturidüse erfolgt, was im Sinne der Erfindung insbesondere als aktive Kühlung bezeichnet werden kann. Es ist demgemäß bevorzugt, dass die, durch die Adsorber- /Desorber-Einheit und/oder Verdampfer- /Kondensator-Einheit bereitgestellte Wärme aktiv oder passiv abgeführt wird. Die aktive oder passive Abführung der Wärme kann bei Betrieb oder Nicht-Betrieb des Verbrennungsmotors geschehen, wobei die Abführung durch eine Ventilationsvorrichtung, insbesondere ein Gebläse oder einer Venturidüse unterstützt wird. Eine passive Abführung der Wärme kann beispielsweise durch strömende Umgebungsluft oder Luft erreicht werden, die insbesondere an den zu kühlenden Einheiten vorbeigeführt wird. Es kann beispielsweise bevorzugt sein, dass Einheiten der Adsorptionskältemaschine so angeordnet sind, dass ein permanenter Luftstrom zur Kühlung der Einheiten bereitsteht. Im Sinne der Erfindung werden die Adsorber- /Desorber-Einheit und/oder die Verdampfer-/Kondensator-Einheit auch als Einheiten bezeichnet.

Es ist bevorzugt, dass eine kontinuierliche Rückkühlung der Adsorber- /Desorber-Einheit und/oder der Verdampfer- /Kondensator-Einheit durch Umgebungsluft stattfindet und die Desorption gegen diese Abkühlung erfolgt. Es war völlig überraschend, dass die Aktivierung auch während des Betriebes des Verbrennungsmotors möglich ist und somit auch während des Betriebes Kälte bereitgestellt werden kann. Hierbei erfolgt eine permanente Kühlung der Einheiten der Adsorptionskältemachine, insbesondere der Adsorber- /Desorber-Einheit und/oder der Verdampfer- /Kondensator-Einheit, wobei nicht zwischen Desorption und Rückkühlphasen umgeschaltet wird, sondern die Desorption einfach überlagernd über die Rückkühlung gelegt wird. Hierdurch wird trotz Rückkühlung eine Desorption und demnach eine Bereitstellung von Kälte erreicht.

In einer bevorzugten Ausführungsform kann die Abführung der Wärme, die durch Adsorber-/Desorber-Einheit und/oder der Verdampfer- /Kondensator-Einheit anfällt, an einen Feststoff abgeleitet werden. Eine passive Abführung der Wärme Bezeichnet im Sinne der Erfindung eine nicht aktive Wärmeleitung, insbesondere Wärmeabstrahlung, Wärmeleitung oder nicht erzwungene Konvektion. Dem Fachmann ist bekannt, dass Wärmeleitung einen Wärmefluss z. B. in einem Feststoff bezeichnet, der aufgrund eines Temperaturgefälles abläuft. Hierbei strömt die Wärme in Richtung geringerer Temperatur. Somit kann Wärme aus der Adsorber-/Desorber-Einheit und/oder der Verdampfer- /Kondensator-Einheit an einen umgebenden Festkörper abgegeben werden. Es ist beispielsweise bevorzugt, dass die Adsorptionskältemaschine in einer Karosserie eines Kraftfahrzeuges vorliegt und ein thermischer Kontakt zwischen den Einheiten der Adsorptionskältemaschine und der Karosserie oder Bestandteilen des Kraftfahrzeuges besteht, so dass die Wärme der Einheiten beispielsweise an eine Bodenplatte der Karosserie oder den Verbrennungsmotor geleitet werden kann, was zur Abkühlung der Einheiten führt. Es kann auch bevorzugt sein, dass die Wärme der Adsorber- /Desorber-Einheit und/oder der Verdampfer- /Kondensator-Einheit zur Motorvorwärmung genutzt wird, indem eine thermische Verbindung zwischen dem Verbrennungsmotor und den Einheiten besteht und der Motor vorgewärmt werden kann. Weiterhin kann es vorteilhaft sein, dass die, durch die Adsorber- /Desorber-Einheit und/oder Verdampfer- /Kondensator-Einheit bereitgestellte Wärme mittels einer Verdunstung eines, bei einer Kompressions-Klimaanlage anfallenden Kondensats abgeführt wird. Die Rückkühlung der Einheiten kann folglich durch eine Verdunstungskühlung des Kondensates aus einer konventionellen Klimaanlage erfolgen. Auch die weiteren Phasen, nämlich die Aktivierung oder die Kälteerzeugung können durch eine aktive oder passive Wärmeableitung unterstützt werden.

Die in einer Adsorptionsmaschine stattfindende Adsorption beschreibt einen physikalischen Prozess, bei dem sich ein gasförmiges Kältemittel (insbesondere Wasser) an einen Feststoff (einem Adsorptionsmaterial) anlagert, wobei bei der Anlagerung Energie von dem Kältemittel auf den Feststoff übertragen wird. Die Desorption des Kältemittels, das heißt das Lösen des Kältemittels von dem Feststoff, benötigt wiederum Energie. In einer Adsorptionskältemaschine wird das Kältemittel, welches bei niedriger Temperatur und niedrigem Druck Wärme aufnimmt und bei höherer Temperatur und höherem Druck Wärme abgibt, so gewählt, dass mit der Ad- beziehungsweise Desorption eine Aggregatzustandsänderung einhergeht. Als Adsorptionsmittel sind Stoffe bevorzugt, die eine sehr große innere Oberfläche besitzen. Vorteilhafte Materialien sind Aktivkohle, Aluminiumoxid, Aluminiumphosphate, Silika- Aluminiumphosphate, Metall-Silika-Aluminiumphosphate, Mesostruktur Silikate, Metall-organische Gerüste und/oder mikroporöses Material, umfassend mikroporöse Polymere. Es können jedoch auch sonstige Materialien verwendet werden, die eine adsorbierende Eigenschaft haben. Bevorzugte Adsorptionsmaterialien sind Silikagele oder Zeolithe, welche aufgrund ihrer großen inneren Oberfläche die Eigenschaft haben, Wasser extrem gut aufzusaugen. Beide Materialen werden häufig als Trocknungsmittel (Verpackungsbeilagen, Doppelverglasung) aber auch in der (petro-chemischen) Industrie als Katalysatorträger oder Molsiebe großtechnisch eingesetzt. Beim Kältemittel Wasser laufen Adsorption/Desorption im Unterdruck ab (0 mbar-200 mbar oder höher). Es ist bevorzugt, dass die Adsorptionskältemaschine als Vakuumbehälter ausgeführt ist.

Es ist bevorzugt, dass die Adsorptionskältemaschine als Kältespeicher betrieben wird, wobei zwischen Adsorber- /Desorber-Einheit und Verdampfer-/Kondensator-Einheit ein Absperr-Ventil vorliegt. Hierdurch ist es möglich, die durch die Adsorptionsmaschine generierte Wärme und/oder Kälte zu speichern und bei Bedarf zu benutzen. Hierbei sind Ad-/Desorber und Verdampfer/Kondensator in verbundenen getrennten Behältern untergebracht, wobei in einer Verbindung der Behälter ein Ventil sitzt. Das desorbierte Adsorbens "saugt" dann die am Ventil eingestellte Kältemittelmenge bis zur Sättigung an und entzieht damit dem Verdampfer die Verdampfungswärme. In dieser Form liegt ein Kältespeicher vor, der wiederaufladbar ist, indem das Sorptionsmittel bei Bedarf desorbiert wird.

Mittels dem bevorzugten Verfahrens ist es möglich, eine Kälteleistung für die Klimatisierung eines Fahrgastraums bereitzustellen. Das Verfahren kann vorteilhafterweise auch zur Motorvorwärmung verwendet werden, indem die Wärme, die bei der Kondensation und Adsorption oder bei der Abkühlung des Adsorptionsmaterials anfällt, an ein Motor (z. B. einen Verbrennungsmotor) geleitet wird. Darüber hinaus bietet die Adsorptionstechnik das Potential Kälte- oder Wärmeenergie nahezu verlustfrei zu speichern (Standklimatisierung und Standbeheizung). Es ist auch bevorzugt, dass das Verfahren als Wärmepumpe verwendet wird, bei der Wärme mit einer niedrigen Temperatur aufgenommen wird und diese auf ein zu beheizendes System mit höherer Temperatur (z. B. Heizung des Fahrgastraums) übertragen wird.

Das Regelorgan ist bevorzugt ein automatisch oder manuell regelbares Ventil. Vorteilhafterweise können unterschiedliche Ventile, die nach ihrer geometrischen Form eingeteilt werden können, in das Rohr integriert werden, das von dem Verbrennungsmotor zu der Adsorptionskältemaschine führt. Hierbei können Ventile umfassend Durchgangsventile, Eckventile, Schrägsitzventile und/oder Dreiwegeventile verwendet werden. Durch die Verwendung der Ventile lässt sich durch Änderung der Nennweite die Durchflussmengen in den Rohrleitungen exakt und präzise dosieren, sowie sicher gegen die Umgebung abschließen. Die Ventile können vorteilhafterweise per Hand, per Medium, maschinell oder elektromagnetisch betätigt werden. Durch das Regelorgan ist es überraschenderweise möglich, den Eintritt eines Fluides in die Adsorptionskältemaschine zu regulieren. Ein Fluid kann im Sinne der Erfindung Luft, insbesondere Umgebungsluft oder Abgas aus einem Verbrennungsmotor sein. Die Umgebungsluft kann z. B. durch Öffnungen in einer Karosserie eingeleitet werden. Das Regelorgan ermöglicht es, dass entweder Abgas, ein Abgas-Luft-Gemisch oder Luft in die Adsorptionskältemaschine, insbesondere in einem Wärmetauscher der Adsorptionskältemaschine geleitet wird. Es ist bevorzugt, dass das Regelorgan ein automatisch oder manuell regelbares Ventil ist, wobei das in die Adsorptionskältemaschine geleitete Abgas auf eine bestimmte Temperatur begrenzt wird, vorzugsweise wenn die Temperatur des Abgases mehr als 400° Celsius beträgt. Das Regelorgan kann somit zur Temperaturbegrenzung eingesetzt werden. Es hat sich herausgestellt, dass eine Temperatur von insbesondere mehr als 400°Celsius zu Schädigungen der Bestandteile der Adsorptionskältemaschine führen können. Das Regelorgan weist bevorzugt einen Temperaturfühler auf, der die Temperatur des Abgases bestimmt. Hat das Abgas eine definierte Temperatur erreicht, kann das Regelorgan automatisch die Zufuhr von Abgas stoppen oder den Volumenstrom, der in die Adsorptionskältemaschine geleitet wird an eine definierte Temperatur, die vorzugsweise unter 400° Celsius ist, anpassen. Hierzu kann vorzugsweise Luft in das Regelorgan eingeleitet werden, so dass die Temperatur des Abgases reduziert wird. Das Abgas-Luft-Gemisch, das vorzugsweise eine Temperatur von weniger als 400 ° Celsius aufweist, kann dann in die Adsorptionskältemaschine geleitet werden.

Es war völlig überraschend, dass eine Adsorptionskältemaschine für das bevorzugte Verfahren benutzt werden kann, deren Bestandteile eine Temperatur von mehr als 400° Celsius aushalten, so dass kein Regelorgan notwendig ist.

Um eine Kälte bereitzustellen, weist die Adsorptionskältemaschine vorzugsweise eine Verbindung zu einer Solepumpe und einem Kaltluft-Wärmetauscher auf. Hierdurch kann die Kälte, die bei der Verdampfung des Kältemittels generiert wird, schnell und effektiv einem Kaltluft-Wärmetausche zur Verfügung gestellt werden.

Es kann jedoch auch vorteilhaft sein, wenn die Adsorptionskältemaschine eine Verbindung zu einer Heatpipe und einem Kaltluft-Wärmetauscher aufweist. Eine Heatpipe, bezeichnet insbesondere ein Wärmeleitrohr oder einen Wärmeübertrager, der unter Nutzung von Verdampfungswärme eines Stoffes eine hohe Wärmestromdichte erlaubt. Wärmerohre enthalten bevorzugt ein hermetisch gekapseltes Volumen, meist in Form eines Rohres. Es ist mit einem Arbeitsmedium (z. B. Wasser) gefüllt, das das Volumen zu einem kleinen Teil in flüssigem, zum größeren in dampfförmigem Zustand ausfüllt. Darin befinden sich je eine Wärmeübertragungsfläche für Wärmequelle und -senke.

In einem weiteren Aspekt betrifft die Erfindung eine Vorrichtung zur Durchführung des Verfahrens, wobei die Vorrichtung
- eine Adsorptionskältemaschine,
- eine Zuleitung aus einem Verbrennungsmotor,
- eine Heatpipe oder Solepumpe und
- einen Kaltluft-Wärmetauscher aufweist.

Es war völlig überraschend, dass die Vorrichtung einfach in ein Kraftfahrzeug integriert werden kann und zur Bereitstellung von Kälte zur Klimatisierung oder zur Kälteerzeugung verwendet werden kann. Hierbei kann die Adsorptionskältemaschine so dimensioniert sein, dass sie in Kontakt mit einer Abgasleitung des Kraftfahrzeuges in die Karosserie eingebaut wird. Es sind flache oder runde Ausführungen der Adsorptionskältemaschine bevorzugt, wobei die Adsorptionskältemaschine mindestens eine Adsorber- /Desorber-Einheit und mindestens eine Verdampfer- /Kondensator-Einheit aufweist. Somit sind auch Mehrkammer-Adsorptionskältemaschinen bevorzugt, die eine kontinuierliche Bereitstellung von Kälte ermöglichen. Es kann auch bevorzugt sein, dass die Adsorptionskältemaschine aus mindestens einer Adsorber/Desorber-Einheit und mindesten einem Verdampfer und einem Kondensator besteht. Bei dieser Ausführungsform weist die Adsorptionskältemaschine mindestens eine Kondensatrückführung auf, die flüssiges Kältemittel aus dem Kondensator in den Verdampfer rückführt.

In einer weiteren bevorzugten Ausführungsform liegt mindestens im Verdampfer ein kältemittelaufsaugendes bzw. kältemittelfixierendes Material vor, um ein unkontrolliertes "Schwappen" während einer Bewegung der Vorrichtung zu verhindern. Es sind Materialien mit kapillaren Effekten, wie Glasfasern, Metallwolle oder Steinwolle bevorzugt. Ein bevorzugter Verdampfer oder Wärmetauscher ist in der WO 2010/000255 oder WO 2011/026483 offenbart, die durch die vorliegende Erfindung erfasst sind. Die Ausführungen zu dem Verfahren gelten analog zu den Ausführungen zu der Vorrichtung und umgekehrt.

In einer bevorzugten Ausführungsform der Vorrichtung ist ein Regelorgan mit der Adsorptionskältemaschine verbunden, das den Volumenstrom von Abgas und/oder Luft in die Adsorptionskältemaschine reguliert. Es kann jedoch vorteilhaft sein, dass die Vorrichtung kein Regelorgan aufweist, so dass kontinuierlich Abgas in die Adsorptionskältemaschine, insbesondere einen Wärmetauscher der Maschine strömt, wobei mindestens eine Rückschlagklappe oder Absperr-Ventil in die Adsorptionskältemaschine integriert ist, so dass ein Übergang von dampfförmigen Kältemittel aus der Adsorber- /Desorber-Einheit in die Verdampfer- /Kondensator-Einheit verhindert wird. Das Absperr-Ventil oder die Klappe können automatisch, insbesondere selbstregulierend den Übergang von Kältemittel regulieren.

Es ist bevorzugt, dass die Steuerung des Verfahrens über das Regelorgan realisiert wird. In einer bevorzugten Ausführungsform wird das Verfahren lediglich über das Abgas/Luft-Regelorgan gesteuert, wenn im Fahr-Betrieb, insbesondere im Betrieb des Verbrennungsmotors eine permanente Rückkühlung der Kondensations- und Adsorptionswärme realisiert wird, die Desorptionswärme bei Bedarf durch das Regelorgan der Rückkühlung der Adsorption überlagert wird. Dies bietet sich für den Aufbau mit getrenntem Verdampfer und Kondensator an, wobei die Adsorber- /Desorber-Einheit von diesen Verdampfer und Kondensator durch Rückschlagklappen getrennt wird.

Die Erfindung wird nunmehr anhand von Figuren beispielhaft beschrieben, ohne jedoch auf diese beschränkt zu sein; es zeigt:
- Fig. 1, 3: Bevorzugtes Verfahren mit Abgaswärmenutzung
- Fig. 2: Bevorzugte Phasen des Verfahrens
- Fig. 4: Verfahren mit einer Solepumpe
- Fig. 5, 6: Bevorzugte Adsorptionskältemaschinen
- Fig. 7, 8: Bevorzugtes Verfahren mit einem Wärmetauscherkreislauf

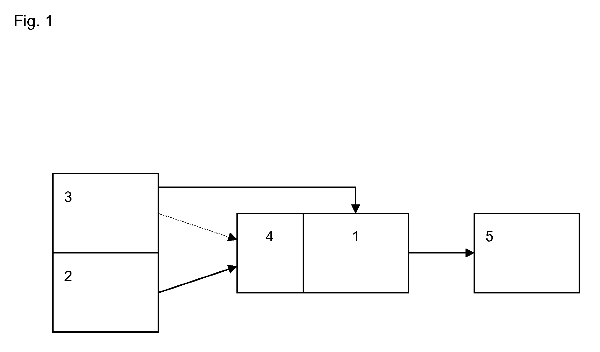

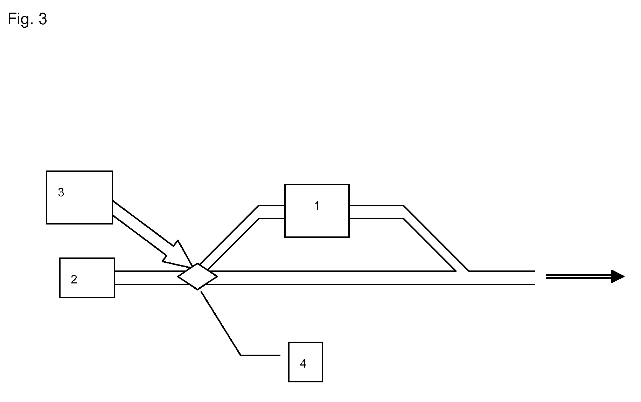

Fig. 1 und 3 zeigen ein bevorzugtes Verfahren zur Bereitstellung von Kälte unter Abgaswärmenutzung. Hierbei ist eine Adsorptionskältemaschine 1 mit einer Abgasleitung 2 eines Verbrennungsmotors verbunden, so dass die Wärme des Abgases in mindestens einen Wärmetauscher der Adsorptionskältemaschine 1 geleitet werden kann. Hier kann die Wärme des Abgases z. B. zur Desorption des Adsorptionsmaterials in einer Adsorber-/Desorber-Einheit der Adsorptionskältemaschine 1 verwendet werden. Das dampfförmige Kältemittel strömt aus der Adsorber- /Desorber-Einheit in eine Verdampfer- /Kondensator-Einheit der Adsorptionskältemaschine 1 und kondensiert. Wenn das flüssige Kältemittel in der Verdampfer- /Kondensator-Einheit verdampft wird, kann Kälte bereitgestellt werden, die über einen Kaltluft-Wärmetauscher 5 einem Raum, z. B. einem Innenraum eines Kraftfahrzeuges zugeführt werden. Die Zuleitung von Abgas in die Adsorptionskältemaschine kann in einer bevorzugten Ausführungsform mittels einem Regelorgan 4 reguliert werden. Es kann auch bevorzugt sein, dass Luft oder Umgebungsluft aus einer Luftzufuhr 3 in das Regelorgan strömt und ggf. mit dem Abgas vermischt wird oder in die Adsorptionskältemaschine geleitet wird. Es ist auch bevorzugt, dass die Zufuhr von Abgas bzw. Luft durch einen geregelten Bypass erfolgt, wobei Abgas und/oder Luftzumischung zur Temperaturbegrenzung der Adsorptionskältemaschine 1 genutzt wird. Eine Ableitung der Wärme (Rückkühlung) der Einheiten der Adsorptionskältemaschine kann optional durch ein Gebläse für einen Luftstrom erfolgen.

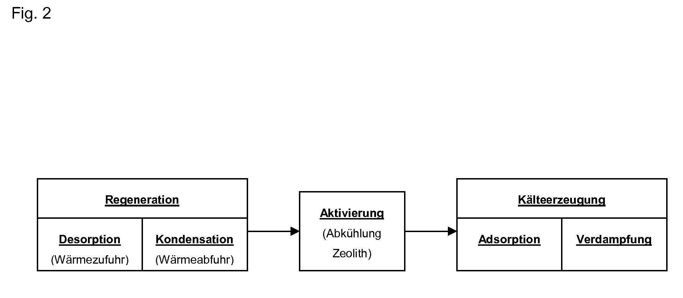

Fig. 2 zeigt bevorzugte Phasen des Verfahrens. Die Bereitstellung von Kälte kann in drei bevorzugte Phasen unterteilt werden, nämlich die Regeneration, die Aktivierung und die Kälteerzeugung, wobei die Regeneration bevorzugt während des Betriebes des Verbrennungsmotors und die Aktivierung insbesondere während des Nicht-Betriebes ablaufen. Die Kälteerzeugung kann vorteilhafterweise während des Betriebes oder des Nicht-Betriebes des Verbrennungsmotors ablaufen. Es kann jedoch auch bevorzugt sein, dass eine kontinuierliche Rückkühlung aller Komponenten der Adsorptionskältemaschine und insbesondere auch der Desober- /Adsorber- Einheit durch Umgebungsluft stattfindet und die Desorption gegen diese Abkühlung erfolgt. Hierdurch ist eine Aktivierung und entsprechend auch Kälteerzeugung während des Betriebes des Motors möglich. Es kann somit eine permanente Kühlung erreicht werden, wobei keine Umschaltung zwischen Desorption und Rückkühlphasen erfolgen muss.

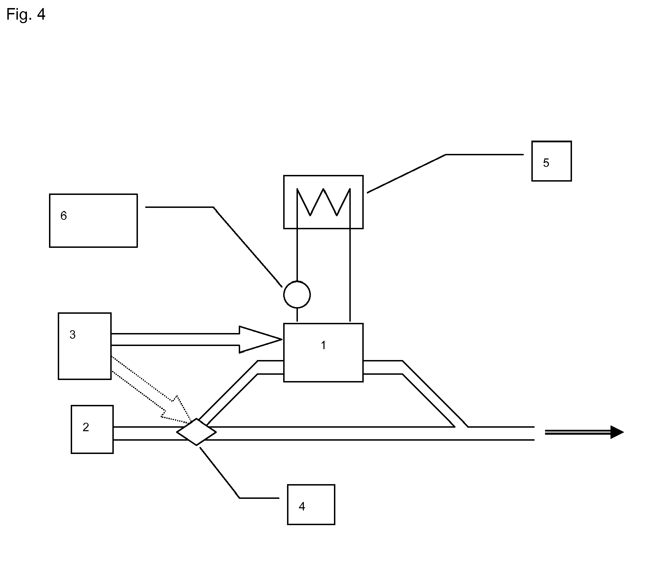

Fig. 4 zeigt ein bevorzugtes Verfahren mit einer Solepumpe. Hierbei ist die Adsorptionskältemaschine 1 mit einer Solepumpe 6 und einem Kaltluft-Wärmetauscher 5 verbunden, so dass effektiv Kälte in einen Raum, z. B. einen Innenraum eines Kraftfahrzeuges geleitet werden kann. Optional zu der Solepumpe kann auch eine Heatpipe mit der Adsorptionskältemaschine und dem Kaltluft-Wärmetauscher verbunden sein. Das bevorzugte Verfahren weist weiterhin eine Abgasleitung oder -zufuhr 2 und eine Luftzufuhr 3 auf. Vorteilhafterweise kann ein Regelorgan 4 die Zuleitung von Abgas und/oder Luft in die Adsorptionskältemaschine regulieren.

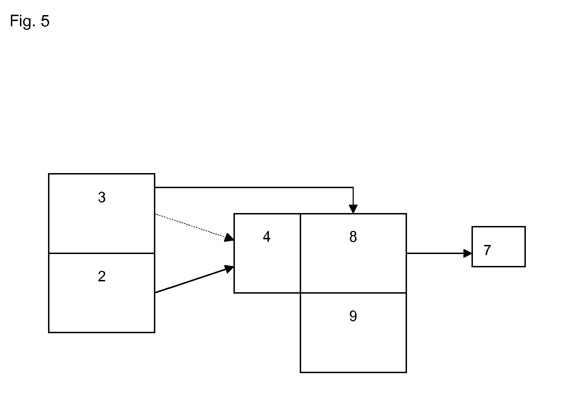

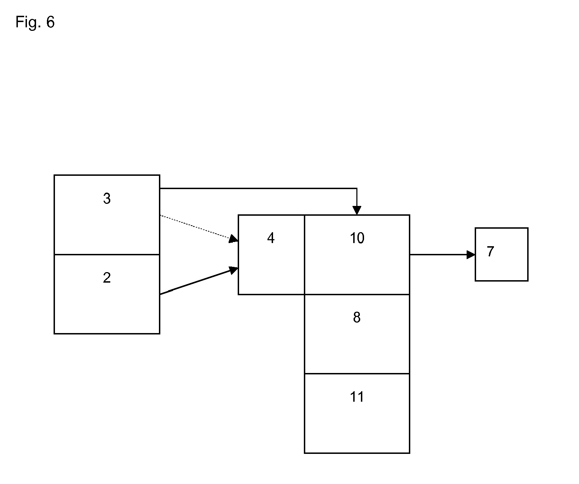

Fig. 5, 6 zeigen eine bevorzugte Adsorptionskältemaschine. Ein bevorzugtes Verfahren kann mit einer Adsorptionskältemaschine durchgeführt werden, die aus mindestens einer Adsorber- /Desorber-Einheit 8 und mindestens einer Verdampfer- /Kondensator-Einheit 9 besteht. Hierbei wird Abgas aus einer Abgasleitung 2 über ein Regelorgan 4 in mindestens einen Wärmetauscher der Adsorber- /Desorber-Einheit 8 und/oder der Verdampfer-/Kondensator-Einheit 9 geleitet und so Kälte 7 bereitgestellt. Es kann auch bevorzugt sein, dass die Adsorptionskältemaschine aus mindestens einer Adsorber- /Desorber-Einheit 8 und mindesten einem Verdampfer 11 und einem Kondensator 10 besteht. Hierbei ist es vorteilhaft, wenn das flüssige Kältemittel aus dem Kondensator 10 in den Verdampfer 11 rückgeführt wird.

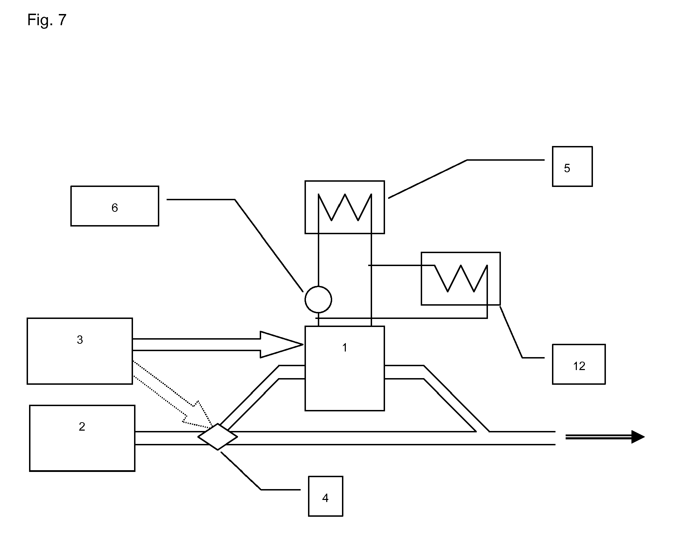

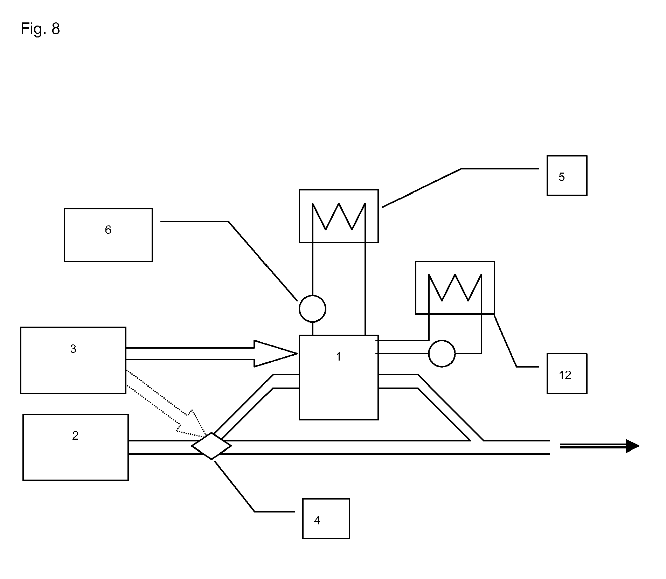

Fig. 7, 8 zeigen ein bevorzugtes Verfahren mit einem Wärmetauscherkreislauf. Es kann auch bevorzugt sein, dass die gesamte oder ein Teil der abzuführenden Adsorptionswärme und/oder Kondensationswärme der Adsorptionskältemaschine 1 durch einen Wärmetauscherkreislauf 12 abgegeben wird. Die Wärme wird dann vorzugsweise nicht an die Umgebungsluft oder durch den Abgaskanal oder an Feststoff weitergeleitet.

### Bezugszeichenliste:

- 1: Adsorptionskältemaschine
- 2: Abgasleitung
- 3: Luftzuleitung (Umgebungsluft)
- 4: Regelorgan
- 5: Kaltluft-Wärmetauscher
- 6: Solepumpe
- 7: Kälte
- 8: Adsorber- /Desorber-Einheit
- 9: Verdampfer- /Kondensator-Einheit
- 10: Kondensator
- 11: Verdampfer
- 12: Wärmetauscherkreislauf

## Patentansprüche

1. Verfahren zur Bereitstellung von Kälte (7), umfassend folgende Schritte:
a. Einleiten von Abgasen aus einer von einem Verbrennungsmotor kommenden Abgasleitung (2) in ein, mindestens einer Adsorptionskältemaschine (1) vorgeschaltetes Regelorgan (4) und/oder
b. Einleiten von Luft (3) in das Regelorgan (4),
c. Einbringen der Abgase oder eines Abgas-Luft-Gemisches oder der Luft aus dem Regelorgan (4) in mindestens einen Wärmetauscher der Adsorptionskältemaschine (1),
d. Desorption eines, in mindestens einer Adsorber- /Desorber-Einheit (8) der Adsorptionskältemaschine (1) befindlichen Adsorptionsmaterials durch Wärmeenergie des Abgases, wobei das, in mindestens einer Verdampfer-/Kondensator-Einheit (9) vorliegende dampfförmige Kältemittel kondensiert wird, und
e. ein in der Adsorptionskältemaschine (1) strömendes Kältemittel in einer Verdampfer- /Kondensator-Einheit (9) der Adsorptionskältemaschine (1) verdampft wird und hierdurch Kälte (7) bereitgestellt wird.

2. Verfahren nach Anspruch 1,
**dadurch gekennzeichnet, dass**
eine Abkühlung des Adsorptionsmaterials sowohl während des Nicht-Betrieb, als auch während des Betriebs des Verbrennungsmotors erfolgen kann.

3. Verfahren nach einem oder mehreren der vorhergehenden Ansprüche,
**dadurch gekennzeichnet, dass**
eine kontinuierliche Rückkühlung der Adsorber- /Desorber-Einheit (8) und/oder der Verdampfer- /Kondensator-Einheit (9) durch Umgebungsluft stattfindet und die Desorption gegen diese Abkühlung erfolgt.

4. Verfahren nach einem oder mehreren der vorhergehenden Ansprüche,
**dadurch gekennzeichnet, dass**
die, durch Adsorber- /Desorber-Einheit (8) und/oder Verdampfer- /Kondensator-Einheit (9) bereitgestellte Wärme aktiv oder passiv abgeführt wird.

5. Verfahren nach einem oder mehreren der vorhergehenden Ansprüche,
**dadurch gekennzeichnet, dass**
zur Kühlung des Adsorptionsmaterials Luft aus dem Regelorgan (4) in mindestens eine Adsorber- /Desorber-Einheit (8) und/oder Luft aus dem Regelorgan (4) in mindestens eine Verdampfer- /Kondensator-Einheit (9) geleitet wird.

6. Verfahren nach einem oder mehreren der vorhergehenden Ansprüche,
**dadurch gekennzeichnet, dass**
das Regelorgan (4) ein automatisch oder manuell regelbares Ventil ist, wobei das in die Adsorptionskältemaschine (1) geleitete Abgas auf eine bestimmte Temperatur begrenzt wird.

7. Verfahren nach einem oder mehreren der vorhergehenden Ansprüche,
**dadurch gekennzeichnet, dass**
die Adsorptionskältemaschine (1) eine Verbindung zu einer Solepumpe (6) und einem Kaltluft-Wärmetauscher (5) und/oder eine Verbindung zu einer Heatpipe und einem Kaltluft-Wärmetauscher (5) aufweist.

8. Verfahren nach einem oder mehreren der vorhergehenden Ansprüche,
**dadurch gekennzeichnet, dass**
die Einleitung von Luft in das Regelorgan (5) mittels eines Gebläses oder einer Venturidüse und/oder die Einleitung von Luft zur Rückkühlung der Adsorber-/Desorber-Einheit (8) und/oder der Verdampfer- /Kondensator-Einheit (9) mittels eines Gebläses oder einer Venturidüse erfolgt.

9. Verfahren nach einem oder mehreren der vorhergehenden Ansprüche,
**dadurch gekennzeichnet, dass**
die durch die Adsorber- /Desorber-Einheit (8) und/oder Verdampfer- /Kondensator-Einheit (9) anfallende Wärme an einen Feststoff abgeleitet wird.

10. Verfahren nach einem oder mehreren der vorhergehenden Ansprüche,
**dadurch gekennzeichnet, dass**
die, durch die Adsorber- /Desorber-Einheit (8) und/oder Verdampfer- /Kondensator-Einheit (9) bereitgestellte Wärme mittels einer Verdunstung eines, bei einer Kompressions-Klimaanlage anfallenden Kondensats abgeführt wird.

11. Verfahren nach einem oder mehreren der vorhergehenden Ansprüche,
**dadurch gekennzeichnet, dass**
ein Übergang von dem dampfförmigen Kältemittel aus der Adsorber- /Desorber-Einheit (8) in die Verdampfer- /Kondensator-Einheit (9) durch ein Absperr-Ventil und/oder Rückschlagklappen verhindert wird.

12. Verfahren nach einem oder mehreren der vorhergehenden Ansprüche,
**dadurch gekennzeichnet, dass**
Wasser als Kältemittel in der Adsorptionskältemaschine (1) vorliegt und/oder als Adsorptionsmaterial in der Adsorptionskältemaschine (1) Aktivkohle, Aluminiumoxid, Aluminiumphosphate, Silika- Aluminiumphosphate, Metall-Silika-Aluminiumphosphate, Mesostruktur Silikate, Metall-organische Gerüste und/oder mikroporöses Material, umfassend mikroporöse Polymere, Silikagele oder Zeolithe vorliegen.

13. Verfahren nach einem oder mehreren der vorhergehenden Ansprüche,
**dadurch gekennzeichnet, dass**
die Adsorptionskältemaschine (1) als Kältespeicher betrieben wird, wobei zwischen Adsorber- /Desorber-Einheit (8) und Verdampfer-/Kondensator-Einheit (9) ein Absperr-Ventil vorliegt und/oder
dass die Adsorptionskältemaschine (1) mindestens zwei Adsorber- /Desorber-Einheiten (8) zur phasenversetzten Desorption und Adsorption des Kältemittels aufweist.

14. Verfahren nach einem oder mehreren der vorhergehenden Ansprüche,
**dadurch gekennzeichnet, dass**
die Steuerung des Verfahrens über das Regelorgan (4) realisiert wird.

15. Vorrichtung zum Betrieb des Verfahrens nach einem oder mehreren der vorhergehenden Ansprüche, wobei die Vorrichtung
- eine Adsorptionskältemaschine (1),
- ein Regelorgan (4),
- eine Zuleitung aus einem Verbrennungsmotor,
- eine Heatpipe und/oder eine Solepumpe (6) und
- einen Kaltluft-Wärmetauscher (5) aufweist
wobei die Adsorptionskältemaschine mindestens eine Adsorber- /Desorber-Einheit (8) und mindestens eine Verdampfer- /Kondensator-Einheit (9) aufweist und das Regelorgan (4) der Adsorptionskältemaschine (1) vorgeschaltet ist.

## Claims

1. Procedure for the supply of refrigerant (7), comprising the following steps:
a. Introduction of exhaust gases of one exhaust pipe (2)of a combustion motor into one regulating element (4) that has at least one upstream absorption refrigerator (1) and/or
b. introduction of air (3) into the regulating element
c. introduction of the exhaust gases or of one waste gas air compound or the air from the regulating element (4) into at least one heat exchanger of the absorption refrigerator (1),
d. Desorption of one, absorption material that is at least located in one absorber/desorber unit (0() of the absorption refrigerator through the thermal energy of the exhaust gas whereby the vapourous refrigerant is condensed that is present in at least evaporator unit / condenser unit (9), and
e. a refrigerant that flows into the absorption refrigerator (1) is vaporised in a vaporisation unit / condenser unit (9) of the absorption refrigerator (1) and refrigerant (7) is provided as a result of this.

2. Procedure according to claim 1,
**characterised by** the fact that
a cooling of the absorption material can take place both during non-operation, and also during the operation of the combustion engine.

3. Procedure according to one or several of the aforementioned claims,
**characterised by** the fact that
the continuous recooling of the absorber/desorber unit (8) and/or the vaporisation / condenser unit (9) takes place through ambient air and the desorption takes place against the cooling.

4. Procedures according to one or several of the aforementioned claims,
**characterised by** the fact that
the heat provided by the absorber/desorber unit (8) and/or the vaporisation / condensation unit (9) is discharged actively or passively.

5. Procedure according to one or several of the aforementioned claims
**characterised by** the fact that
air from the regulating element (4) is guided into at least one absorber/desorber unit (8) and/or air from the regulating element (4) is guided into at least one vaporisation/condensation unit (9) to cool the absorption material.

6. Procedure according to one or several of the aforementioned claims
**characterised by** the fact that
the regulating element (4) is a valve that can be regulated automatically or manually whereby the exhaust gas that is guided into the absorption refrigerator (1) is limited to a certain temperature.

7. Procedure according to one or several of the aforementioned claims
**characterised by** the fact that
the absorption refrigerator (1) has a connection with the brine pump (6) and the cold air heat exchanger (5) and/or a connection with a heat pipe and a cold air heat exchanger (5).

8. Procedure according to one or several of the aforementioned claims
**characterised by** the fact that
the introduction of air into the regulating element (5) is performed using a blower or a Venturi nozzle and/or the introduction of air for the recooling or the absorber/desorber (9) is performed by means of a blower or a Venturi nozzle.

9. Procedure according to one or several of the aforementioned claims,
**characterised by** the fact that
the heat generated by the absorber/desorber unit (8) and/or the vaporisation/condensation unit (9) is drained off to a solid.

10. Procedure according to one or several of the aforementioned claims,
**characterised by** the fact that
the heat provided by the absorber/desorber unit (8) and/or the vaporisation/condensation unit (9) is drained off by means of vaporisation of a condensate which is generated by a compression air conditioning system.

11. Procedure according to one or several of the aforementioned claims,
**characterised by** the fact that
a transition from the vaporous refrigerant from the absorber/desorber unit (8) into the vaporisation/condensation unit (9) is prevented by a shut-off valve and/or check valve.

12. Procedure according to one or several of the aforementioned claims,
**characterised by** the fact that
water is present as a refrigerant in the absorption refrigerator (1) and/or that activated carbons, aluminium oxides, aluminium phosphates, silica aluminium phosphates, metal silica aluminium phosphate, mesostructure silicates, metal organic compounds and/or microporous materials, comprehensive microporous polymers, silica gels or zeolites are present as an absorption material in the absorption refrigerator in the absorption refrigerator (1).

13. Procedure according to one or several of the aforementioned claims,
**characterised by** the fact that
the absorption refrigerator (1) is operated as a cooling unit whereby there is a shut-off valve between the absorber/desorber unit (8) and the vaporisation/condensation unit (9) and/or
that the absorption refrigerator (1) has at least two absorber/desorber units (8) for the phase-shifted desorption or absorption of the refrigerant.

14. Procedure according to one or several of the aforementioned claims.
**characterised by** the way that
the control of the procedure is realised using the regulating element (4).

15. Equipment for the operation of the procedure in accordance with one or several of the aforementioned claims whereby the equipment
- has an absorption refrigerator (1),
- a regulating element (4),
- a feed line from the combustion engine,
- a heat pipe and/or a brine pump (6) and
- a cold air heat exchanger (5)
whereby the absorption refrigerator has at least one absorber/desorber unit (8) and at least one vaporisation / condensation unit (9) and the regulating element (4) is upstream of the absorption refrigerator (1).

## Revendications

1. Procédé de production de froid (7), comprenant les étapes suivantes :
a. l'introduction de gaz d'échappement provenant d'une conduite de gaz d'échappement (2) d'un moteur à combustion interne, dans un organe de régulation (4) monté en amont d'au moins une machine frigorifique à adsorption (1) et/ou
b. l'introduction d'air (3) dans l'organe de régulation (4),
c. l'introduction des gaz d'échappement ou d'un mélange de gaz d'échappement et d'air, ou bien de l'air provenant de l'organe de régulation (4), dans au moins un échangeur de chaleur de la machine frigorifique à adsorption (1),
d. la désorption, par énergie thermique des gaz d'échappement, d'un matériau d'adsorption se trouvant dans au moins un ensemble adsorbeur / désorbeur (8) de la machine frigorifique à adsorption (1), où le fluide frigorigène, à l'état de vapeur, se trouvant dans au moins un ensemble évaporateur / condenseur (9) est condensé, et
e. un fluide frigorigène s'écoulant dans la machine frigorifique à adsorption (1) est évaporé dans un ensemble évaporateur / condenseur (9) de la machine frigorifique à adsorption (1) et, de ce fait, du froid (7) est produit.

2. Procédé selon la revendication 1, **caractérisé en ce qu'**un refroidissement du matériau d'adsorption peut se produire aussi bien pendant le non-fonctionnement que pendant le fonctionnement du moteur à combustion interne.

3. Procédé selon l'une quelconque ou plusieurs des revendications précédentes, **caractérisé en ce qu'**une réfrigération continue de l'ensemble adsorbeur / désorbeur (8) et/ou de l'ensemble évaporateur / condenseur (9) a lieu sous l'effet de l'air ambiant, et la désorption se produit en opposition à ce refroidissement.

4. Procédé selon l'une quelconque ou plusieurs des revendications précédentes, **caractérisé en ce que** la chaleur produite par l'ensemble absorbeur / désorbeur (8) et/ou par l'ensemble évaporateur / condenseur (9) est dissipée de façon active ou passive.

5. Procédé selon l'une quelconque ou plusieurs des revendications précédentes, **caractérisé en ce que**, pour le refroidissement du matériau d'adsorption, de l'air provenant de l'organe de régulation (4) est dirigé dans au moins un ensemble adsorbeur / désorbeur (8) et/ou de l'air provenant de l'organe de régulation (4) est dirigé dans au moins un ensemble évaporateur / condenseur (9).

6. Procédé selon l'une quelconque ou plusieurs des revendications précédentes, **caractérisé en ce que** l'organe de régulation (4) est une vanne réglable automatiquement ou manuellement, où les gaz d'échappement dirigés dans la machine frigorifique à adsorption (1) sont limités à une température déterminée.

7. Procédé selon l'une quelconque ou plusieurs des revendications précédentes, **caractérisé en ce que** la machine frigorifique à adsorption (1) présente un raccordement à une pompe à saumure (6) et à un échangeur de chaleur à air froid (5) et/ou un raccordement à un caloduc et à un échangeur de chaleur à air froid (5).

8. Procédé selon l'une quelconque ou plusieurs des revendications précédentes, **caractérisé en ce que** l'introduction d'air dans l'organe de régulation (5) se produit au moyen d'une soufflante ou d'un tube de Venturi et/ou l'introduction d'air servant à la réfrigération de l'ensemble adsorbeur / désorbeur (8) et/ou de l'ensemble évaporateur / condenseur (9) se produit au moyen d'une soufflante ou d'un tube de Venturi.

9. Procédé selon l'une quelconque ou plusieurs des revendications précédentes, **caractérisé en ce que** la chaleur se produisant à travers l'ensemble adsorbeur / désorbeur (8) et/ou à travers l'ensemble évaporateur / condenseur (9) est dissipée au niveau d'une matière solide.

10. Procédé selon l'une quelconque ou plusieurs des revendications précédentes, **caractérisé en ce que** la chaleur produite par l'ensemble adsorbeur / désorbeur (8) et/ou par l'ensemble évaporateur / condenseur (9) est dissipée par évaporation d'un condensat se formant dans un système de climatisation à compression.

11. Procédé selon l'une quelconque ou plusieurs des revendications précédentes, **caractérisé en ce qu'**un passage du fluide frigorigène à l'état de vapeur, venant de l'ensemble adsorbeur / désorbeur (8) et allant dans l'ensemble évaporateur / condenseur (9), est empêché par une vanne d'arrêt et/ou par des clapets antiretour.

12. Procédé selon l'une quelconque ou plusieurs des revendications précédentes, **caractérisé en ce que** de l'eau servant de fluide frigorigène se trouve dans la machine frigorifique à adsorption (1) et/ou sont présents dans la machine frigorifique à adsorption (1), comme matériau d'adsorption, du charbon actif, de l'oxyde d'aluminium, des phosphates d'aluminium, des phosphates d'aluminium et de silice, des phosphates d'aluminium de silice et de métaux, des silicates à mésostructure, des produits de soutien organométalliques et/ou un matériau microporeux comprenant des polymères microporeux, des gels de silice ou des zéolithes.

13. Procédé selon l'une quelconque ou plusieurs des revendications précédentes, **caractérisé en ce que** la machine frigorifique à adsorption (1) est actionnée comme un accumulateur de froid où une vanne d'arrêt est placée entre l'ensemble adsorbeur / désorbeur (8) et l'ensemble évaporateur / condenseur (9) et/ou **en ce que** la machine frigorifique à adsorption (1) présente au moins deux ensembles adsorbeurs / désorbeurs (8) servant à la désorption et à l'adsorption - décalées en phase - du fluide frigorigène.

14. Procédé selon l'une quelconque ou plusieurs des revendications précédentes, **caractérisé en ce que** la commande du procédé est réalisée par l'organe de régulation (4).

15. Dispositif pour faire fonctionner le procédé selon l'une quelconque ou plusieurs des revendications précédentes, où le dispositif présente
- une machine frigorifique à adsorption (1),
- un organe de régulation (4),
- une conduite d'amenée venant d'un moteur à combustion interne,
- un caloduc et/ou une pompe à saumure (6) et
- un échangeur de chaleur à air froid (5),
où la machine frigorifique à adsorption présente au moins un ensemble adsorbeur / désorbeur (8) et au moins un ensemble évaporateur / condenseur (9), et l'organe de régulation (4) est monté en amont de la machine frigorifique à adsorption (1).
